# FASCICULE DE BREVET EUROPEEN

(11) **EP 1 104 162 B1**
(45) Date de publication et mention de la délivrance du brevet: **21.07.2010**
(21) Numéro de dépôt: 00403294.2
(22) Date de dépôt: 24.11.2000
(51) Int. Cl.: H04N 1/00

(54) **Télécopieur pour réseau informatique**
Faksimilegerät für Datennetzwerk
Facsimile apparatus for data network

(30) Priorité: 26.11.1999 FR 9914908
(43) Date de publication de la demande: 30.05.2001
(73) Titulaire: SAGEM COMMUNICATIONS SAS, 92848 Rueil Malmaison Cedex (FR)
(72) Inventeur: Ardin, Christian, 27860 Heudicourt (FR)
(74) Mandataire: Bloch, Gérard

(56) Documents cités:
- EP-A- 0 855 821
- WO-A-97/10668
- WO-A-99/53682
- US-A- 5 838 458
- US-A- 5 903 723

## Description

De nombreux télécopieurs disposent aujourd'hui de capacités Internet, leur permettant d'émettre et de recevoir des télécopies à travers l'Internet. Généralement, les télécopies sont transmises à travers l'Internet par message électronique.

Un message électronique comprend un en-tête, un corps de message et, éventuellement, une ou plusieurs pièces jointes, attachées au message. L'en-tête comprend notamment un champ de provenance et un champ de destination, contenant respectivement les adresses informatiques de messagerie, ou plus couramment appelées adresses « e-mail », de l'émetteur et du récepteur. L'en-tête du message comprend généralement d'autres champs, notamment un champ objet dans lequel l'objet du message peut être indiqué. Le corps du message contient, en principe, le message proprement dit. Enfin, la ou les pièces jointes sont des fichiers de données, qui peuvent être de types (sons, images, vidéos, textes, etc.) et de formats (wav, gif, tiff, jpeg, pdf; doc, etc.) très variés.

Les télécopies, transmises à travers l'Internet, peuvent être attachées à un message, sous la forme d'une pièce jointe, de format approprié, par exemple de format « TIFF », ou bien être insérées dans le corps d'un message.

La messagerie Internet permettant de transmettre des fichiers de type autre que télécopie, un télécopieur émetteur, ayant des capacités appropriées, peut envoyer une pièce jointe, par exemple audio, attachée à un message, à un télécopieur récepteur, à travers l'Internet. La pièce jointe audio peut par exemple être constituée par un message vocal, enregistré par l'utilisateur du télécopieur émetteur. Cependant, le télécopieur récepteur ne pourra diffuser le messge vocal, que s'il a des capacités pour lire (c'est-à-dire exploiter ou traiter) la pièce jointe vocale. Or, les télécopieurs disposent généralement de capacités limitées pour lire des fichiers de type autre que télécopie et seront, par conséquent, le plus souvent incapables de lire une pièce jointe vocale, et plus généralement une pièce jointe de type autre que télécopie.

La présente invention propose de pallier cet inconvénient.

L'invention tire son origine d'un problème lié à l'Internet. Toutefois, la demanderesse entend ne pas limiter la portée de sa demande à cet exemple particulier, mais l'étendre à tout réseau informatique.

Par le document WO99/53682, on connaît un télécopieur du type défini dans le préambule de la revendication 1. Mais ce document se borne à enseigner l'insertion d'une notice d'utilisation dans un message électronique pour permettre au récepteur d'acquérir une application de lecture d'une pièce jointe.

Et c'est ainsi que l'invention de la présente demande concerne le télécopieur de la revendication 1.

On notera que le document EP-A-0 855 821 enseigne d'adjoindre une notice qui indique les logiciels utilisés pour créer la pièce jointe, alors que, dans le télécopieur de la présente demande, on reconnaît le format de la pièce jointe pour renseigner la notice d'utilisation compte tenu de ce format et ce n'est pas du tout la même chose, notamment au plan des possibilités laissées en émission, qui sont améliorées ; en réception, le télécopieur de l'invention offre une grande latitude opérationnelle.

De préférence, les moyens pour insérer la notice d'utilisation sont agencés pour insérer, dans le message, un lien actif de connexion à un site informatique, destiné à fournir au télécopieur récepteur une application pour lire la pièce jointe.

Grâce à l'adresse informatique de connexion au site et/ou au lien actif de connexion au site, le télécopieur récepteur peut se connecter à ce site et le consulter, afin de récupérer une application pour lire la pièce jointe, auprès de ce site.

Avantageusement, les moyens pour insérer la notice d'utilisation sont agencés pour insérer, dans le message, une adresse informatique de messagerie d'un serveur informatique, destiné à fournir au télécopieur récepteur une application pour lire la pièce jointe.

L'utilisateur du télécopieur récepteur peut ainsi requérir une application pour lire la pièce jointe, en envoyant un message au serveur informatique.

L'invention concerne également un procédé de transmission d'un message électronique, à travers un réseau informatique, entre un télécopieur émetteur et un télécopieur récepteur, selon la revendication 6.

L'invention sera mieux comprise à l'aide de la description suivante du télécopieur et du procédé de transmission de l'invention, en référence au dessin annexé sur lequel:
- la figure 1 représente un schéma bloc fonctionnel du télécopieur de l'invention, selon une forme de réalisation particulière et

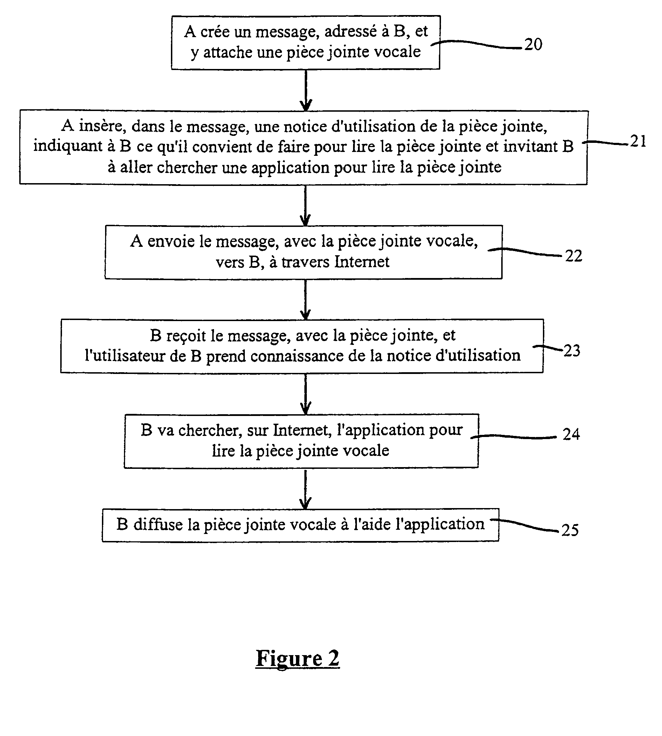

- la figure 2 représente les différentes étapes du procédé de transmission de l'invention, selon un mode de réalisation particulier de l'invention.

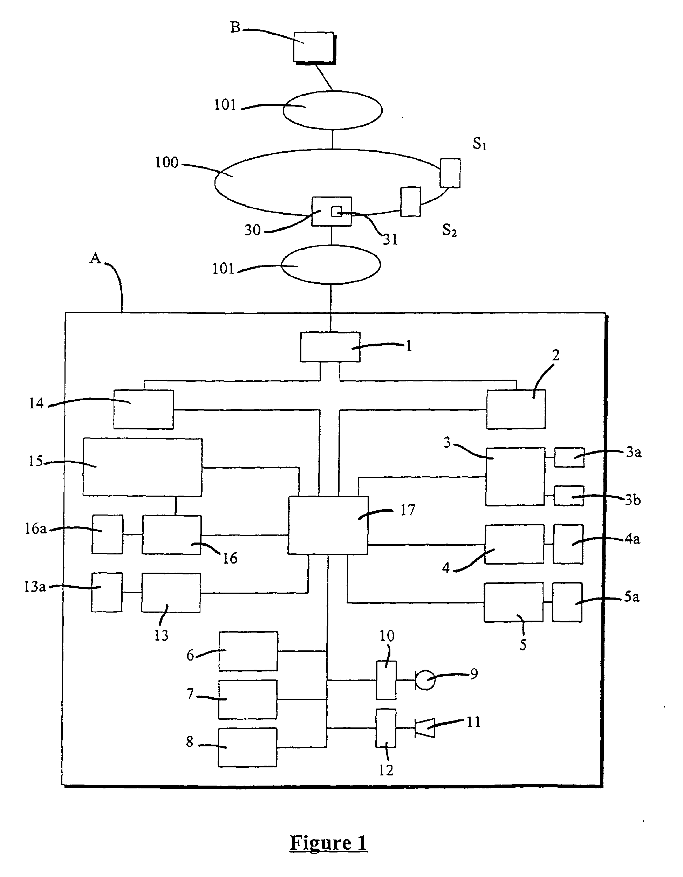

Le télécopieur A, représenté sur la figure 1, est agencé pour émettre et recevoir des télécopies, soit à travers un réseau téléphonique 101, ici le réseau RTC (réseau téléphonique commuté), soit à travers un réseau informatique 100, ici l'Internet, par message électronique. Le télécopieur dispose d'un accès à l'Internet 100 et d'un service de messagerie électronique, fournis par un serveur Internet 30. Le télécopieur a également une adresse informatique de messagerie, sur l'Internet 100. En outre, le serveur 30 héberge une boîte à lettres 31, attribuée au télécopieur A, dans laquelle les messages, adressés au télécopieur A et transmis à travers l'Internet 100, sont destinés à être provisoirement stockés, jusqu'à leur téléchargement dans le télécopieur A, ici sur requête de celui-ci.

Par la suite, on appellera "adresse e-mail", une adresse informatique de messagerie sur l'Internet 100.

Le télécopieur A comprend un bloc 1 de liaison au réseau téléphonique 101, comportant un modem, un automate 2 de décroché, de raccroché et de numérotation, un bloc 3 d'émission et de réception de télécopies par le réseau téléphonique 101, un bloc scanner 4, un bloc d'impression 5 et une interface homme-machine.

L'interface homme-machine comprend un clavier de saisie 6, un écran d'affichage 7, une application d'interface homme-machine 8 et ici un microphone 9 ainsi qu'un haut-parleur 11. Le microphone 9 et le haut-parleur 11 sont reliés respectivement à un convertisseur analogique numérique (CAN) 10 et à un convertisseur numérique analogique (CNA) 12. L'application d'interface homme-machine 8 permet de faire communiquer le télécopieur et un utilisateur, par l'affichage d'informations sur l'écran 7 et par la saisie d'informations et de commandes à l'aide du clavier 6.

L'automate 2 est destiné à décrocher, de façon automatique, la ligne téléphonique, soit pour recevoir un appel entrant, soit pour appeler un correspondant. En cas d'appel sortant, l'automate 2 est destiné à décrocher puis à composer automatiquement le numéro d'appel téléphonique du correspondant. En fin de communication téléphonique, l'automate 2 est destiné à raccrocher automatiquement.

Le bloc 3 d'émission et de réception de télécopies est destiné à émettre et à recevoir des télécopies, à travers le réseau téléphonique 101, suivant un protocole de communication de télécopie, ici le protocole T30. Il est relié à une mémoire de télécopies reçues 3a et à une mémoire de télécopies en attente d'émission 3b.

Le bloc scanner 4 est destiné à analyser des documents de télécopie, à les numériser et à convertir les données de télécopie dans un format de télécopie sélectionné ici parmi les formats FAX et TIFF. Dans le cas où la télécopie est destinée à être transmise, suivant le protocole T30, à travers le réseau téléphonique, le format FAX est sélectionné automatiquement. Dans le cas où la télécopie est destinée à être transmise à travers l'Internet 100, en pièce jointe d'un message électronique, c'est le format TIFF qui est sélectionné automatiquement. Les données d'image de chaque document de télécopie, converties dans un format sélectionné, constituent un fichier de données de type télécopie, du format sélectionné. Ce fichier de télécopie est provisoirement stocké dans une mémoire 4a, relié au bloc scanner 4.

Le télécopieur A comprend en outre un lecteur/enregistreur audio 13, permettant de lire et d'éditer (c'est-à-dire de créer) des fichiers de données audio, et notamment des fichiers de données vocales, à l'aide du microphone 9 et du haut-parleur 11. Pour enregistrer un message vocal, un utilisateur du télécopieur A enregistre le message vocal, sous forme analogique, à l'aide du microphone 9 et du lecteur/enregistreur audio 13. Le message vocal est ensuite numérisé par le convertisseur CAN 10 puis les données vocales sont converties par le lecteur/enregistreur 13 dans un format audio, ici le format WAV. Le fichier de données vocales, de format WAV, ainsi créé, est provisoirement stocké dans une mémoire 13a de fichiers audio, reliée au lecteur/enregistreur audio 13.

Le télécopieur A comprend également un bloc 14 de connexion à l'Internet 100, un bloc 15 de messagerie électronique et un bloc 16 d'insertion d'une notice d'utilisation d'une pièce jointe.

Le bloc de connexion 14 est destiné à connecter le télécopieur à l'Internet 100, par connexion téléphonique au serveur 30.

Le bloc de messagerie électronique 15 comprend une application de messagerie électronique, permettant au télécopieur de créer des messages électroniques, plus couramment appelés messages "e-mail", de lire des messages, en vue de leur visualisation ou de leur impression, et d'émettre et de recevoir des messages à travers l'Internet 100. Le bloc de messagerie 15 comporte en outre une mémoire de messages reçus et une mémoire de messages émis ou en attente d'émission.

Un message électronique est un moyen de communication à travers l'Internet 100. Chaque message comprend un en-tête, un corps de message et, éventuellement, une ou plusieurs pièces jointes. L'en-tête contient différents champs d'informations, et notamment un champ de provenance et un champ de destination, respectivement destinés à contenir l'adresse e-mail de l'émetteur du message et l'adresse e-mail du récepteur du message. Le corps du message est prévu pour contenir le message proprement dit. Enfin, la ou les pièces jointes sont des fichiers de données qui peuvent être de type (télécopie, audio, texte, vidéo, etc.) et de format (TIFF, WAV, PDF, DOC, etc.) très divers.

Pour envoyer une télécopie à travers l'Internet 100, le bloc de messagerie 15 crée un message contenant, dans les champs de provenance et de destination, les adresses e-mail respectives du télécopieur A et du destinataire de la télécopie, et attache à ce message, en pièce jointe, la télécopie, sous la forme d'un fichier de données de télécopie de format TIFF. Par ailleurs, le télécopieur A se connecte à l'Internet 100 et envoie le message, avec la télécopie en pièce jointe, à travers l'Internet 100. Le message est acheminé jusqu'à l'adresse e-mail du destinataire à travers l'Internet 100.

On soulignera que le télécopieur A peut également attacher à un message une pièce jointe audio, correspondant à un message vocal enregistré par l'utilisateur du télécopieur A, à l'aide du lecteur/enregistreur audio 13 et du microphone 9, et transmettre ce message, avec la pièce jointe vocale, à travers l'Internet 100.

Les messages, adressés au télécopieur A et transmis à travers l'Internet 100, sont d'abord reçus par le serveur 30 et provisoirement stockés dans la boîte à lettres 31, jusqu'à leur téléchargement dans le télécopieur A, sur requête de celui-ci.

Le bloc d'impression 5 est destiné à imprimer les télécopies reçues, transmises par le réseau téléphonique 101 suivant le protocole T30, les télécopies jointes à un message reçu, transmis à travers l'Internet 100, ainsi que les messages eux-mêmes (c'est-à-dire l'en-tête et le corps de ces messages). Une mémoire 5a de stockage de documents en attente d'impression est reliée au bloc d'impression 5.

Le télécopieur A comprend en outre un automate 16 d'insertion d'une notice d'utilisation d'une pièce jointe, relié au bloc de messagerie 15 et à une mémoire 16a. Cette mémoire 16a contient ici une notice d'utilisation d'une pièce jointe audio, associée à des formats de fichiers audio (MP3, WAV, etc.).

L'automate 16 est destiné à détecter qu'une pièce jointe, de type autre que télécopie, est attachée à un message, afin d'insérer automatiquement (c'est-à-dire sans l'intervention d'un utilisateur), ici dans le corps du message, une notice appropriée d'utilisation de la pièce jointe, extraite de la mémoire 16a. La détection d'une pièce jointe de type autre que télécopie s'effectue par comparaison du format de cette pièce jointe avec des formats de télécopie, ici les formats TIFF et FAX. En cas de détection d'une pièce jointe de type autre que télécopie, le bloc d'insertion 16 recherche, dans la mémoire 16a, une notice d'utilisation, à laquelle est associé le format de la pièce jointe considéré, par comparaison de ce format avec ceux associés à la notice d'utilisation stockée dans la mémoire 16a.

La notice d'utilisation d'une pièce jointe audio contient des informations d'aide à l'utilisation de la pièce jointe, destinées à indiquer à l'utilisateur du télécopieur récepteur de la pièce jointe, ce qu'il convient de faire pour utiliser, c'est-à-dire pour lire et diffuser la pièce jointe audio. En l'espèce, la notice d'utilisation d'une pièce jointe audio contient l'indication selon laquelle il faut ouvrir la pièce jointe audio pour l'écouter, et invite le télécopieur récepteur à envoyer un message, à travers l'Internet 100, à un serveur Internet de messagerie S₁ d'aide à l'utilisation de pièces jointes, dont l'adresse e-mail est fournie, et/ou à se connecter à un site Internet S₂ d'aide à l'utilisation de pièces jointes, dont l'adresse URL est également fournie, et à consulter ce site S₂. Le serveur S₁ et le site S₂ sont destinés à fournir des indications supplémentaires pour utiliser des pièces jointes, ici audio, ainsi que des applications pour lire des fichiers audio de divers formats (MP3, WAV, etc.).

Un site Web, hébergé par un serveur Internet, comprend au moins une page d'informations, ou page "Web", généralement de format HTML, contenant divers éléments multimédia (textes, images, animations, liens hypertextes, etc.). Une adresse URL est attribuée à chacune des pages Web d'un site, "l'adresse URL du site" désignant généralement l'adresse URL de la page d'accueil de ce site. Les adresses URL des différentes pages Web d'un site permettent à un terminal informatique, ayant des capacités pour naviguer sur l'Internet, de se connecter au site considéré et d'acquérir ces pages Web.

A titre illustratif, l'adresse e-mail du serveur S₁, est de la forme "speak@S₁.com" et l'adresse URL du site S₂ est de la forme "http://www.S₂.com".

L'adresse URL, contenue dans la notice d'utilisation, est celle de la page d'accueil du site S₂. Comme indiqué plus haut, cette adresse URL permet à un télécopieur, équipé d'un navigateur Internet, de se connecter au site S₂ et de récupérer, par téléchargement, la page d'accueil du site S₂. En outre, l'adresse URL du site S₂ constitue ici un lien hypertexte, c'est-à-dire un lien informatique actif de connexion au site S₂ et d'acquisition de la page d'accueil de ce site S₂.

Enfin, le télécopieur A comprend une unité centrale de commande 17, à laquelle tous les éléments du télécopieur A sont reliés, et destinée à commander le fonctionnement du télécopieur.

Après la description structurelle et fonctionnelle du télécopieur A, le procédé de transmission du télécopieur A à un télécopieur B, d'un message électronique, auquel est attachée une pièce jointe vocale, va maintenant être décrit. Ce procédé correspond au fonctionnement du télécopieur A.

Dans l'exemple particulier de la description, le télécopieur récepteur B est identique au télécopieur A, à la différence près qu'il est dépourvu de capacités pour lire des fichiers audio, et notamment des fichiers de format WAV. En revanche, le télécopieur B comprend ici un navigateur Internet, permettant au télécopieur B de visiter des sites Web et de télécharger des pages de ces sites Web.

Un utilisateur du télécopieur A enregistre un message vocal, à l'aide du lecteur/enregistreur audio 13 et du microphone 9. Le message vocal, enregistré sous forme analogique, est converti en données numériques vocales par le convertisseur CAN 10. Ces données vocales sont converties dans le format WAV par le lecteur/enregistreur audio 13. Le fichier audio de données vocales, de format WAV, ainsi créé, est provisoirement stocké dans la mémoire 13a.

A l'aide de l'interface homme-machine, l'utilisateur saisit l'adresse e-mail du télécopieur B et commande l'envoi du message vocal enregistré, à travers l'Internet 100, vers le télécopieur B. Les étapes suivantes sont ici effectuées par le télécopieur A, de façon automatique.

A l'aide du bloc de messagerie 15, le télécopieur A crée (étape 20) un message électronique contenant, dans les champs de provenance et de destination, l'adresse e-mail du télécopieur A et celle du télécopieur B, et attache à ce message, en pièce jointe, le fichier de données vocales de format WAV, stocké dans la mémoire 13a.

L'automate d'insertion 16 lit le format de la pièce jointe, attachée au message, et, par comparaison aux divers formats de télécopie mémorisés (FAX, TIFF), détecte qu'il s'agit d'une pièce jointe de type autre que télécopie. Le bloc d'insertion 16 compare alors le format de la pièce jointe aux formats (WAV, MP3, etc.), associés à la notice d'utilisation stockée dans la mémoire 16a, détecte ainsi qu'il s'agit d'une pièce jointe de type audio et insère automatiquement, dans le corps du message, la notice d'utilisation d'une pièce jointe audio (étape 21).

Par le biais de cette notice d'utilisation, le télécopieur émetteur A indique au télécopieur récepteur B, ou à un utilisateur de ce télécopieur B, ce qu'il convient de faire pour lire la pièce jointe vocale, attachée au message, et invite le télécopieur B à aller chercher une application pour lire la pièce jointe vocale auprès du serveur de messagerie S₁ ou auprès du site S₂.

Puis le télécopieur A se connecte à l'Internet 100 et envoie le message, avec la pièce jointe vocale, à travers l'Internet 100 (étape 22). Le message est transmis au télécopieur récepteur B, à travers l'Internet 100.

Après réception du message du télécopieur émetteur A par le télécopieur récepteur B (étape 23), un utilisateur du télécopieur B commande l'affichage du message, c'est-à-dire de l'en-tête et du corps du message, sur l'écran du télécopieur B. Le corps du message contient l'indication selon laquelle une pièce jointe audio, de format WAV, est attachée au message ainsi que la notice d'utilisation de la pièce jointe vocale. L'utilisateur du télécopieur B prend connaissance du contenu du message et notamment de la notice d'utilisation.

Le télécopieur B peut aller chercher une application pour lire la pièce jointe audio, ainsi que des informations supplémentaires concernant cette pièce jointe, soit par envoi d'un message à l'adresse e-mail du serveur de messagerie S₁ (premier cas), soit par connexion au site S₂ (second cas), suivant le choix de l'utilisateur du télécopieur B.

Dans le premier cas, sous la commande de l'utilisateur, le télécopieur B crée un message de requête d'acquisition d'une application pour lire la pièce jointe vocale de format WAV, sous la commande de l'utilisateur. Les champs de provenance et de destination de ce message contiennent les adresses e-mail respectives du télécopieur B et du serveur S₁. Le corps du message contient un message textuel, saisi par l'utilisateur du télécopieur B, par lequel le télécopieur B indique qu'il souhaite lire une pièce jointe audio de format WAV. Puis, le télécopieur B se connecte à l'Internet 100, s'il n'y est pas déjà connecté, et émet le message de requête vers le serveur S1, à travers l'Internet 100. Après réception la requête, le serveur S₁ transmet au télécopieur B, à travers l'Internet 100, un message comportant, dans le corps de message, des indications pour utiliser la pièce jointe vocale et, en pièce jointe, une application pour lire la pièce jointe vocale de format WAV.

Dans le second cas, le télécopieur B se connecte à l'Internet 100 et active le lien hypertexte de connexion au site S₂, contenu dans la notice d'utilisation, en cliquant dessus à l'aide d'un pointeur, sous la commande de l'utilisateur. Sous l'action de l'activation du lien, de façon automatique, le télécopieur B lance le navigateur qui se connecte au site S₂ et lui adresse une requête de téléchargement de sa page d'accueil. Au lieu d'activer le lien hypertexte de connexion au site S₂, le télécopieur B pourrait lancer le navigateur Internet et saisir l'adresse URL du site S₂ dans une zone d'adresse du navigateur, de façon à ce que le navigateur se connecte au site S₂ et récupère la page d'accueil de ce site S₂.

Sur réception de la requête du télécopieur B, le site S₂ transmet au télécopieur B la page d'accueil requise. Celle-ci contient des informations sur les fichiers audio et divers liens hypertextes d'acquisition de diverses applications pour lire des fichiers audio de divers formats (MP3, WAV, etc.). Pour obtenir une application pour lire des fichiers audio de format WAV, le télécopieur B active le lien d'acquisition correspondant, en cliquant dessus à l'aide d'un pointeur, sous la commande de l'utilisateur. Le télécopieur B adresse alors au site S₂ une requête d'acquisition de l'application pour lire des fichiers audio de format WAV. Sur réception de cette requête, le site S₂ transmet au télécopieur B l'application requise, à travers l'Internet 100.

Le télécopieur B va ainsi chercher l'application pour lire la pièce jointe vocale reçue, sur l'Internet 100, (étape 24), soit par l'envoi d'un message au serveur Internet S₁, soit en se connectant au site S₂ et en établissant une communication en temps réel avec ce site S₂. Après réception, par le télécopieur B, de l'application pour lire des fichiers audio de format WAV, il suffit au télécopieur B d'ouvrir la pièce jointe audio reçue, sous la commande de l'utilisateur, pour lire cette pièce jointe et ainsi diffuser le message vocal de l'utilisateur du télécopieur A, à l'aide de l'application reçue et d'un haut-parleur (étape 25).

Dans la description qui précède, le lien informatique d'accès au site Web, destiné à fournir une application pour lire la pièce jointe, est constitué par l'adresse URL du site considéré. Ce lien pourrait avoir toute autre forme.

En variante, le télécopieur émetteur A a des capacités pour créer des fichiers de type vidéo, texte ou autre. Dans ce cas, le télécopieur A stocke, dans la mémoire de stockage 16a, une pluralité de notices d'utilisation de pièces jointes de différents types, chaque notice d'utilisation étant adaptée à un type déterminé de pièce jointe (vidéo, texte ou autre). Les différentes notices d'utilisation invitent le télécopieur récepteur à aller chercher une application pour lire la pièce jointe reçue (vidéo, texte ou autre.), soit par envoi d'un message à un serveur Internet, soit par connexion à un site Web, le serveur Internet et le site Web étant spécifiquement destinés à fournir des applications pour lire des pièces jointes d'un type déterminé (vidéo, texte ou autre). Chaque notice d'utilisation est associée, dans la mémoire 16a, à une pluralité de formats, pour lesquels elle est appropriée.

Lorsqu'une pièce jointe de type autre que télécopie est attachée à un message, l'automate d'insertion 16 sélectionne, parmi la pluralité de notices d'utilisation stockées dans la mémoire 16a, celle qui est appropriée à la pièce jointe considérée, par comparaison du format de la pièce jointe considérée avec les formats associés aux différentes notices d'utilisation de la mémoire 16a. Après avoir sélectionné la notice d'utilisation appropriée, le bloc d'insertion 16 commande au bloc de messagerie 15 de l'insérer dans le message.

On pourrait également prévoir différentes notices d'utilisation pour les différents formats de pièce jointe.

On pourrait aussi envisager un unique serveur Internet de messagerie et un unique site Web, destinés à fournir des applications pour lire des fichiers de différents types (vidéo, texte etc.) et de différents formats. Dans ce cas, le télécopieur émetteur pourrait ne stocker qu'une seule notice universelle d'utilisation de pièce jointe, invitant le télécopieur récepteur à aller chercher une application pour lire une pièce jointe reçue, quels que soient le type et le format de celle-ci, auprès du serveur de messagerie ou du site Web.

Par ailleurs, l'insertion de la notice d'utilisation d'une pièce jointe pourrait être commandée par un utilisateur, au lieu d'être effectuée automatiquement sur détection d'une pièce jointe de type autre que télécopie, attachée à un message.

On soulignera qu'il suffit que la notice d'utilisation contienne au moins l'un des éléments du groupe comportant une adresse URL de connexion au site S₂, un lien actif de connexion au site Web S₂ et une adresse de messagerie électronique du serveur S₁, pour permettre au télécopieur récepteur d'aller chercher sur l'Internet une application pour lire la pièce jointe reçue.

## Revendications

1. Télécopieur comprenant des moyens (14) de connexion à un réseau informatique (100), des moyens (15) pour créer des messages électroniques, les messages pouvant comprendre au moins une pièce jointe, et des moyens (15) d'émission de messages à travers le réseau informatique, les télécopies étant destinées à être transmises, par message électronique, à travers le réseau informatique (100), télécopieur **caractérisé par le fait qu'**il comprend des moyens (16, 15) pour détecter dans le message électronique une pièce jointe de type autre que télécopie et pouvant être de type divers, en reconnaître le format et y insérer automatiquement une notice d'utilisation tenant compte du format reconnu pour permettre à un télécopieur récepteur d'acquérir au moins une application de lecture de ladite pièce jointe.

2. Télécopieur selon la revendication 1, dans lequel les moyens (16) de détection de pièce jointe et pour insérer la notice d'utilisation sont agencés pour insérer, dans le message, un lien actif de connexion à un site informatique, destiné à fournir au télécopieur récepteur une application pour lire la pièce jointe.

3. Télécopieur selon l'une des revendications 1 et 2, dans lequel les moyens (16) pour insérer la notice d'utilisation sont agencés pour insérer, dans le message, une adresse informatique de messagerie d'un serveur informatique, destiné à fournir automatiquement au télécopieur récepteur une application pour lire la pièce jointe.

4. Télécopieur selon l'une des revendications 1 à 3, dans lequel les moyens (16) pour insérer la notice d'utilisation sont agencés pour insérer, dans le message, des indications pour lire la pièce jointe.

5. Télécopieur selon l'une des revendications 1 à 4, dans lequel il est prévu des moyens de stockage d'une pluralité de notices d'utilisation d'une pluralité de pièces jointes, de types respectifs différents, et les moyens (16) pour insérer la notice d'utilisation sont agencés pour sélectionner, parmi la pluralité de notices d'utilisation, celle appropriée à la pièce jointe considérée.

6. Procédé de transmission d'un message électronique, à travers un réseau informatique (100), entre un télécopieur émetteur (A) et un télécopieur récepteur (B), dans lequel le télécopieur émetteur (A) émet le message, à travers le réseau informatique (100), vers le télécopieur récepteur (B), **caractérisé par le fait que**, dans le cas où le message contient une pièce jointe de type autre que télécopie et pouvant être de type divers, le télécopieur émetteur (A), après l'avoir détectée et en avoir reconnu le format fournit automatiquement au télécopieur récepteur (B) une notice d'utilisation compte- tenu dudit format lui permettant d'acquérir une application de lecture de ladite pièce jointe.

7. Procédé selon la revendication 6, dans lequel le télécopieur émetteur (A) fournit au télécopieur récepteur (B) des indications pour aller chercher une application de lecture de ladite pièce jointe, à une adresse informatique, le télécopieur récepteur (B) acquiert ladite application à l'aide de laquelle il lit la pièce jointe.

8. Procédé selon la revendication 7, dans lequel l'application de lecture s'acquiert auprès d'un service informatique (S₁, S₂) assuré par un serveur internet (S₁), le télécopieur émetteur (A) ayant envoyé un message comportant l'adresse électronique du serveur internet (S₁).

9. Procédé selon la revendication 8, dans lequel, pour acquérir ladite application, le télécopieur récepteur (B) crée et envoie un message électronique de requête d'acquisition de cette application au serveur (S1).

10. Procédé selon la revendication 6, dans lequel, le service informatique étant assuré par un site internet (S2), pour permettre au télécopieur récepteur (B) d'acquérir ladite application, le télécopieur émetteur (A) lui envoie un message électronique comportant un lien hypertexte actif de requête de téléchargement de la page d'accueil du site internet (S2).

11. Procédé selon la revendication 10, dans lequel, pour acquérir ladite application, le télécopieur récepteur (B) se connecte à l'internet (100), active le lien hypertexte de connexion au site (S2) en cliquant dessus sous la commande de l'utilisateur, récupère sa page d'accueil dans laquelle il active le lien d'acquisition correspondant à ladite application en cliquant sur ledit lien sous la commande de l'utilisateur, adressant ainsi au site (S2) une requête d'acquisition correspondant à ladite application, et reçoit cette dernière en temps réel.

12. Procédé selon l'une des revendications 6 à 11, dans lequel c'est l'utilisateur du télécopieur récepteur (B) qui, en déclenchant manuellement les messages de requête automatiquement créés, choisit l'un des services informatiques (S1, S2) proposés.

## Claims

1. Facsimile machine comprising means (14) of connection to a computer network (100), means (15) for creating electronic messages, the messages being able to comprise at least one attachment, and means (15) of sending messages through the computer network, the facsimiles being intended to be transmitted, by electronic message, through the computer network (100), a facsimile machine **characterised by** the fact that it comprises means (16, 15) for detecting in the electronic message an attachment of a type other than the facsimile and being able to be of various types, by recognising the format and automatically inserting therein an instruction notice taking account of the format recognised in order to enable a receiving facsimile machine to acquire at least one application for reading said attachment.

2. Facsimile machine according to claim 1, in which the means (16) of detecting the attachment and for inserting the instruction notice are arranged so as to insert, in the message, an active link for connection to a computer site, intended to supply to the receiving facsimile machine an application for reading the attachment.

3. Facsimile machine according to one of claims 1 and 2, in which the means (16) for inserting the instruction notice are arranged so as to insert, in the message, a computer messaging address of a computer server, intended to automatically supply to the receiving facsimile machine an application for reading the attachment.

4. Facsimile machine according to one of claims 1 to 3, in which the means (16) for inserting the instruction notice are arranged so as to insert, in the message, indications for reading the attachment.

5. Facsimile machine according to one of claims 1 to 4, in which means of storing a plurality of instruction notices for a plurality of attachments, of respective different types, are provided, and the means (16) for inserting the instruction notice are arranged so as to select, from the plurality of instruction notices, the one that is appropriate to the attachment in question.

6. Method of transmitting an electronic message, through a computer network (100), between a sending facsimile machine (A) and a receiving facsimile machine (B), in which the sending facsimile machine (A) sends the message, through the computer network (100), to the receiving facsimile machine (B), **characterised by** the fact that, in the case where the message contains an attachment of a type other than a facsimile and which may be of various types, the sending facsimile machine (A), after having detected it and recognised the format thereof, automatically supplies to the receiving facsimile machine (B) an instruction notice having regard to the said format enabling it to acquire an application for reading said attachment.

7. Method according to claim 6, in which the sending facsimile machine (A) supplies to the receiving facsimile machine (B) indications for seeking an application for reading said attachment, at a computer address, the receiving facsimile machine (B) acquires said application by means of which it reads the attachment.

8. Method according to claim 7, in which the reading application is acquired from a computer service (S₁, S₂) provided by an internet server (S₁), the sending facsimile machine (A) having sent a message including the electronic address of the internet server (S₁).

9. Method according to claim 8, in which, in order to acquire said application, the receiving facsimile machine (B) creates and sends an electronic message requesting acquisition of this application to the server (S1).

10. Method according to claim 6, in which, the computer service being provided by an internet site (S2), to enable the receiving facsimile machine (B) to acquire said application, the sending facsimile machine (A) sends to it an electronic message comprising an active hypertext link requesting downloading of the homepage of the internet site (S2).

11. Method according to claim 10, in which, in order to acquire said application, the receiving facsimile machine (B) connects to the internet (100), activates the hypertext link for connection to the site (S2) by clicking on it under the control of the user, recovers its home page in which it activates the acquisition link corresponding to said application by clicking on said link under the control of the user, thus sending to the site (S2) an acquisition request corresponding to said application, and receives the latter in real time.

12. Method according to one of claims 6 to 11, in which it is the user of the receiving facsimile machine (B) who, by manually triggering the request messages automatically created, chooses one of the computer services (S1, S2) offered.

## Patentansprüche

1. Faxgerät, umfassend Mittel (14) zum Anschließen an ein Computernetzwerk (100), Mittel (15) zum Erstellen von elektronischen Nachrichten, wobei die Nachrichten mindestens eine Anlage umfassen können, und Mittel (15) zum Senden von Nachrichten über das Computernetzwerk, wobei die Telefaxe dazu gedacht sind, durch eine elektronische Nachricht über das Computernetzwerk (100), übertragen zu werden, wobei das Faxgerät **dadurch gekennzeichnet ist, dass** es Mittel (16, 15) umfasst, um in der elektronischen Nachricht eine Anlage zu erfassen, die von einer anderen Art als ein Telefax ist und verschiedenartig sein kann, ihr Format zu erkennen und darin automatisch eine Verwendungsanleitung einzufügen, die das erkannte Format berücksichtigt, um es einem empfangenden Faxgerät zu ermöglichen, mindestens eine Anwendung zum Lesen der Anlage zu erwerben.

2. Faxgerät nach Anspruch 1, wobei die Mittel (16) zum Erfassen einer Anlage und zum Einfügen der Verwendungsanleitung angeordnet sind, um in die Nachricht einen aktiven Link zum Anschließen an eine Computer-Site einzufügen, die dazu gedacht ist, dem empfangenden Faxgerät eine Anwendung zum Lesen der Anlage bereitzustellen.

3. Faxgerät nach einem der Ansprüche 1 und 2, wobei die Mittel (16) zum Einfügen der Verwendungsanleitung angeordnet sind, um in die Nachricht eine elektronische Adresse eines Nachrichtendienstes eines Computer-Servers einzufügen, der dazu gedacht ist, dem empfangenden Faxgerät automatisch eine Anwendung bereitzustellen, um die Anlage zu lesen.

4. Faxgerät nach einem der Ansprüche 1 bis 3, wobei die Mittel (16) zum Einfügen der Verwendungsanleitung angeordnet sind, um in die Nachricht Angaben zum Lesen der Anlage einzufügen.

5. Faxgerät nach einem der Ansprüche 1 bis 4, wobei Mittel zum Speichern einer Vielzahl von Verwendungsanleitungen einer Vielzahl von Anlagen jeweils unterschiedlicher Art bereitgestellt werden, und die Mittel (16) zum Einfügen der Verwendungsanleitung angeordnet sind, um aus der Vielzahl von Verwendungsanleitungen diejenige auszuwählen, die für die betreffende Anlage geeignet ist.

6. Verfahren zum Übertragen einer elektronischen Nachricht über ein Computernetzwerk (100) zwischen einem sendenden Faxgerät (A) und einem empfangenden Faxgerät (B), wobei das sendende Faxgerät (A) die Nachricht über das Computernetzwerk (100) an das empfangende Faxgerät (B) sendet, **dadurch gekennzeichnet, dass** falls die Nachricht eine Anlage enthält, die von einer anderen Art als ein Telefax ist und verschiedenartig sein kann, das sendende Faxgerät (A), nachdem es diese erfasst und ihr Format erkannt hat, dem empfangenden Faxgerät (B) angesichts des Formats automatisch eine Verwendungsanleitung bereitstellt, die es ihm ermöglicht, eine Anwendung zum Lesen der Anlage zu erwerben.

7. Verfahren nach Anspruch 6, wobei das sendende Faxgerät (A) dem empfangenden Faxgerät (B) Angaben liefert, damit es sich an einer elektronischen Adresse eine Anwendung zum Lesen der Anlage besorgt, wobei das empfangende Faxgerät (B) die Anwendung erwirbt, mit der es die Anlage liest.

8. Verfahren nach Anspruch 7, wobei die Leseanwendung bei einem Computerdienst (S₁, S₂) erworben wird, der von einem Internetserver (S₁) sichergestellt wird, nachdem das sendende Faxgerät (A) eine Nachricht gesendet hat, welche die elektronische Adresse des Internetservers (S₁) umfasst.

9. Verfahren nach Anspruch 8, wobei das empfangende Faxgerät (B) zum Erwerben der Anwendung eine elektronische Anforderungsnachricht zum Erwerben dieser Anwendung erstellt und an den Server (S1) sendet.

10. Verfahren nach Anspruch 6, wobei der Computerdienst von einer Internetseite (S2) sichergestellt wird, um es dem empfangenden Faxgerät (B) zu ermöglichen, die Anwendung zu erwerben, wobei das sendende Faxgerät (A) ihm eine elektronische Nachricht sendet, die einen aktiven Hyperlink zum Anfordern des Herunterladens der Homepage der Internetseite (S2) enthält.

11. Verfahren nach Anspruch 10, wobei sich das empfangende Faxgerät (B) zum Erwerben der Anwendung an das Internet (100) anschließt, den Hyperlink zum Anschließen an die Site (S2) aktiviert, indem es diese unter der Kontrolle des Benutzers anklickt, seine Homepage einholt, auf der es den Erwerbslink aktiviert, welcher der Anwendung entspricht, indem es unter der Kontrolle des Benutzers diesen Link anklickt, wodurch es an die Site (S2) eine Erwerbsanforderung richtet, die der Anwendung entspricht, und letztere in Echtzeit empfängt.

12. Verfahren nach einem der Ansprüche 6 bis 11, wobei es der Benutzer des empfangenden Faxgeräts (B) ist, der durch manuelles Auslösen der automatisch erstellten Anforderungsnachrichten einen der angebotenen Computerdienste (S1, S2) wählt.
